# EUROPÄISCHE PATENTSCHRIFT

(11) **EP 1 525 275 B1**
(45) Veröffentlichungstag und Bekanntmachung des Hinweises auf die Patenterteilung: **02.08.2006**
(21) Anmeldenummer: 03740376.3
(22) Anmeldetag: 28.06.2003
(51) Int. Cl.: C09D 167/08

(54) **BASISLACKE ENTHALTEND FETTSÄUREMODIFIZIERTE EPOXYESTER UND/ODER FETTSÄUREMODIFIZIERTE ALKYDHARZE, VERFAHREN ZU DEREN HERSTELLUNG UND DEREN VERWENDUNG**
BASE PAINTS CONTAINING FATTY ACID-MODIFIED EPOXY ESTERS AND/OR FATTY ACID-MODIFIED ALKYD RESINS, METHODS FOR THE PRODUCTION THEREOF AND THEIR USE
PEINTURES D'APPRET CONTENANT DES EPOXYESTERS A ACIDES GRAS MODIFIES OU DES RESINES ALKYDES A ACIDES GRAS MODIFIES, LEUR PROCEDE DE PRODUCTION ET LEUR UTILISATION

(30) Priorität: 31.07.2002 DE 10234794
(43) Veröffentlichungstag der Anmeldung: 27.04.2005
(73) Patentinhaber: BASF Coatings AG, 48165 Münster (DE)
(72) Erfinder: LÜER, Ingo, 97276 Margretshöchheim (DE); LAVALAYE, Jorn, 97970 Würzburg (DE)
(74) Vertreter: Fitzner, Uwe
(86) Internationale Anmeldenummer: PCT/EP2003/006883
(87) Internationale Veröffentlichungsnummer: WO 2004/018577

(56) Entgegenhaltungen:
- EP-A- 1 158 032
- WO-A-00/73388
- DE-A- 4 226 243
- US-B1- 6 168 865
- "Technical Datasheet, Resydrol AM 224w/40WA" [Online] 21. November 2000 (2000-11-21) , SOLUTIA XP002255728 Gefunden im Internet: <URL: 68.157.247.52/Solutiap.nsf/0/ 617451ADF29B07A7052569680078A179?OpenDocum ent> [gefunden am 2003-09-25] das ganze Dokument
- "Technical Datasheet, Resydrol AX 250w/75EP" [Online] 21. November 2000 (2000-11-21) , SOLUTIA XP002255729 Gefunden im Internet: <URL: 68.157.247.52/Solutiap.nsf/0/ 617451ADF29B07A7052569680078A179?OpenDocum ent> [gefunden am 2003-09-25] das ganze Dokument
- "Technical Datasheet, Resydrol AF 502w/35WA" [Online] , SOLUTIA XP002255730 Gefunden im Internet: <URL: 68.157.247.52/Solutiap.nsf/0/ 617451ADF29B07A7052569680078A179?OpenDocum ent> [gefunden am 2003-09-25] das ganze Dokument

## Beschreibung

Im Rahmen der vorliegenden Erfindung sind alle prozentualen Angaben, soweit nicht anders angegeben, als Gewichtsprozent zu verstehen. Im Rahmen der vorliegenden Erfindung ist der Terminus (Meth)acrylat so zu verstehen, daß er sowohl Acrylat als auch Methacrylat gleichzeitig umfaßt.

Die Palette der verschiedenen Farbtöne in Lacken und Lackierungen ― speziell in Automobillacken und -lackierungen ― vergrößert sich kontinuierlich. Derzeit existieren rund 25000 verschiedene Farbtöne bei Automobillacken, wobei der Trend zu immer mehr und immer neuen Farbtönen weiter anhält. Im Zuge der Herstellung immer neuer Farbtöne werden in den Lacken immer neue Pigmente bzw. immer neue Kombinationen von verschiedensten Pigmenten und Pigmentmengen notwendig.

Bei Automobil-Basislacken , z.B. auf Basis von PUR/Acrylat-Bindemitteln kann es bei manchen Farbtönen zu Problemen bezüglich der Farbtonstabilität nach Lagerung des Naßmaterials oder nach dessen Belastung durch Scherung in der Ringleitung kommen. Dies äußert sich dann derart, daß Lackmaterial, welches nach einer Belastung durch Lagerung (Raumtemperatur oder 40°C) oder nach Belastung durch Scherung (Labortest mittels langsamem Rühren) oder nach Belastung durch eine Ringleitung lackiert wurde, gegenüber dem unbelasteten Material eine sichtbare Farbtonveränderung aufweist. Dies kann zu Problemen an der Kundenlinie führen, da die Farbtonübereinstimmung mit Tonvorlage und Anbauteilen unter Umständen nicht mehr gegeben ist. Zum anderen kann dies zu Problemen mit der Grundsatzfreigabe verschiedener neuer Farbtöne führen, da aus diesem Problem resultierende Farbtonschwankungen selbstverständlich nicht gewünscht sind. In Abhängigkeit von der Erreichung der für die Farbtonvorlage benötigten Pigmentkombination, können Farbtonveränderungen oder Pigmentagglomeration auftreten.
Bedingt durch die Tatsache, daß Automobillacke den allerhöchsten Qualitätsbedingungen gehorchen müssen und deren immer komplexerer Zusammensetzung, ist es nicht mehr ohne weiteres möglich, Dispergieradditive einzusetzen, die sich bei einfacheren Lacken bzw. einzelnen Pigmenten bewährt haben. Es ist vielmehr so, daß immer aufwendigere Tests durchgeführt werden müssen, um adäquate Dispergieradditive für den jeweiligen Farbton zu ermitteln.

Aufgabe der vorliegenden Erfindung war es daher, einen Weg zu finden, Basislacke universell anwendbar zu stabilisieren, insbesondere die Farbtonänderung von Lacken bei Lagerung und/oder Scherbelastung in Abhängigkeit von der Pigmentkombination weitgehend, insbesondere vollständig zu vermeiden.
Ferner war es eine Aufgabe der Erfindung derart stabilisierte Basislacke zur Verfügung zu stellen.
Ebenfalls Aufgabe der Erfindung war es, Mehrschicht-Systeme enthaltend die genannten Basislacke, zur Verfügung zu stellen.

Gelöst wird diese Aufgab durch einen Basislack enthaltend ein oder mehrere wasserlösliche fettsäuremodifizierte Epoxyester und/oder ein oder mehrere fettsäuremodifizierte Alkydharze, wobei der Basislack als Bindemittel ein Polymer enthält, das erhältlich ist, indem in einem organischen Lösemittel oder in einem Gemisch organischer Lösemittel
A) ethylenisch ungesättigte Monomere oder ein Gemisch ethylenisch ungesättigter Monomere in Gegenwart
B) eines Polyurethanharzes, das ein zahlenmittleres Molekulargewicht von 200 bis 30 000 aufweist und das im statistischen Mittel pro Molekül 0,05 bis 1,1 polymerisierbare Doppelbindungen enthält,
polymerisiert werden und das so erhaltene Reaktionsprodukt in eine wässrige Dispersion überführt wird.
Gegenstand der Erfindung ist darüber hinaus ein Verfahren zur Herstellung von Basislacken, bei welchem man einem Basislack ein oder mehrere wasserlösliche fettsäuremodifizierte Epoxyester und/oder ein oder mehrere fettsäuremodifizierte Alkydharze zusetzt, wobei der Basislack als Bindemittel ein Polymer enthält, das erhältlich ist, indem in einem organischen Lösemittel oder in einem Gemisch organischer Lösemittel
A) ethylenisch ungesättigte Monomere oder ein Gemisch ethylenisch ungesättigter Monomere in Gegenwart
B) eines Polyurethanharzes, das ein zahlenmittleres Molekulargewicht von 200 bis 30 000 aufweist und das im statistischen Mittel pro Molekül 0,05 bis 1,1 polymerisierbare Doppelbindungen enthält,
polymerisiert werden und das so erhaltene Reaktionsprodukt in eine wässrige Dispersion überführt wird.

Außerdem betrifft die Erfindung die Verwendung der Basislacke in Beschichtungen.

Eine bevorzugte Ausführungsform der Erfindung ist, daß der Basislack als Bindemittel nur ein oder mehrere wasserlösliche fettsäuremodifizierte Epoxyester und/oder fettsäuremodifizierte ein oder mehrere Alkydharze aufweist.
Eine weitere bevorzugte Ausführungsform ist es, wenn der Basislack 1 bis 10%, bezogen auf den Festkörper, ein oder mehrere wasserlösliche fettsäuremodifizierte Epoxyester und/oder ein oder mehrere fettsäuremodifizierte Alkydharze als Zusatz zu bestehenden Rezepturen enthält.

In allen Ausführungsformen ist es dabei bevorzugt, wenn als wasserlöslicher fettsäuremodfizierter Epoxyester Resydrol® AX250W/75 der Firma Solutia ist.

Die mit den erfindungsgemäß zu verwendenden wasserlöslichen fettsäuremodifizierten Epoxyestem und/oder fettsäuremodifizierten Alkydharzen stabilisierbaren Basislacke können alle gebräuchlichen Basislacke sein.
Besonders vorteilhafte Ergebnisse werden bei der Verwendung der wasserlöslichen fettsäuremodifizierten Epoxyester und/oder fettsäuremodifizierten Alkydharze in PUR/Acrylat-Bindemittel haltigen Basislacken erzielt.

Der Basislack enthält als Bindemittel ein Polymer, das erhältlich ist, indem in einem organischen Lösemittel oder in einem Gemisch organischer Lösemittel
A) ethylenisch ungesättigte Monomere oder ein Gemisch ethylenisch ungesättigter Monomere in Gegenwart
B) eines Polyurethanharzes, das ein zahlenmittleres Molekulargewicht von 200 bis 30 000, vorzugsweise 1000 bis 5000 aufweist und das im statistischen Mittel pro Molekül 0,05 bis 1.1, vorzugsweise 0,2 bis 0,9, besonders bevorzugt 0,3 bis 0,7 polymerisierbare Doppelbindungen enthält,
polymerisiert werden und das so erhaltene Reaktionsprodukt in eine wäßrige Dispersion überführt wird.
Zur Herstellung der eingesetzten Bindemittel wird in einem ersten Schritt nach gut bekannten Methoden der Polyurethanchemie ein Polyurethanharz (B) hergestellt. Das Polyurethanharz wird aus folgenden Komponenten hergestellt:
a) einem Polyester- und/oder Polyetherpolyol mit einem zahlenmittleren Molekulargewicht von 400 bis 5000 oder einem Gemisch aus solchen Polyester- und/oder Polyetherpolyolen,
b) eine Polyisocyanat oder einem Gemisch aus Polyisocyanaten,
c) gegebenenfalls einer Verbindung, die neben einer polymerisierbaren Doppelbindung mindestens noch eine gegenüber NCO-Gruppen reaktive Gruppe enthält oder einem Gemisch aus solchen Verbindungen,
d) gegebenenfalls einer Verbindung, die mindestens eine gegenüber Isocyanatgruppen reaktive und mindestens eine zur Anionenbildung befähigte Gruppe im Molekül aufweist oder einem Gemisch aus solchen Verbindungen,
e) gegebenenfalls einer Verbindung, die mindestens eine gegenüber NCO-Gruppen reaktive Gruppe und mindestens eine Poly(oxyalkylen)gruppe im Molekül aufweist oder einem Gemisch aus solchen Verbindungen und gegebenenfalls,
f) einer Hydroxyl- und/oder Aminogruppen enthaltenden organischen Verbindung mit einem Molekulargewicht von 60 bis 600, oder einem Gemisch aus solchen Verbindungen.
Das Polyurethanharz (B) soll ein zahlenmittleres Molekulargewicht von 200 bis 30 000, vorzugsweise 1000 bis 5000 und im statistischen Mittel pro Molekül 0,05 bis 1,1, vorzugsweise 0,2 bis 0,9, besonders bevorzugt 0,3 bis 0,7 polymerisierbare Doppelbindungen enthalten. Es ist bevorzugt daß das Polyurethanharz (B) eine Säurezahl von 0 bis 2,0 aufweist Das Molekulargewicht der Polyurethanharze kann - wie dem Fachmann bekannt - insbesondere durch das Mengenverhältnis und die Funktionalität der eingesetzten Ausgangsverbindungen (a) bis (f) gesteuert werden. Die Polyurethanharze können sowohl in Substanz als auch in organischen Lösemitteln hergestellt werden.
Die Polyurethanharze können durch gleichzeitige Umsetzung aller Ausgangsverbindungen hergestellt werden. In vielen Fällen ist es jedoch zweckmäßig, die Polyur-ethanharze stufenweise herzustellen. So ist es zum Beispiel möglich, aus den Komponenten (a) und (b) ein isocyanatgruppenhaltiges Präpolymer herzustellen, das dann mit der Komponente (c) weiter umgesetzt wird. Weiter ist es möglich, aus den Komponenten (a), (b), (c) und gegebenenfalls (d) und (e) ein isocyanatgruppenhaltiges Präpolymer herzustellen, das dann mit der Komponente (f) zu höhermolekularen Polyurethanen umgesetzt werden kann. In den Fällen, in denen als Komponente (c) eine Verbindung eingesetzt wird, die nur eine gegenüber Isocyanatgruppen reaktive Gruppe enthält, kann in einer ersten Stufe aus (b) und (c) ein isocyanatgruppenhaltiges Vorprodukt hergestellt werden, das anschließend mit den weiteren Komponenten weiter umgesetzt werden kann.
Die Umsetzung der Komponenten (a) bis (f) wird zweckmäßigerweise in Gegenwart von Katalysatoren wie z. B. Dibutylzinndilaurat, Dibutylzinnmaleat, tertiäre Amine usw. durchgeführt.
Die einzusetzenden Mengen an Komponente (a), (b), (c), (d), (e) und (f) ergeben sich aus dem anzustrebenden zahlenmittleren Molekulargewicht und der anzustrebenden Säurezahl. Die polymerisierbaren Doppelbindungen können durch Einsatz von polymerisierbaren Doppelbindungen aufweisenden (a) Komponenten und/oder die Komponente (c) in die Polyurethanmoleküle eingeführt werden. Es ist bevorzugt, die polymerisierbaren Doppelbindungen über die Komponente (c) einzuführen.
Als Komponente (a) können gesättigte und ungesättigte Polyester- und/oder Polyetherpolyole, insbesondere Polyester- und/oder Polyetherdiole, mit einem zahlenmittleren Molekulargewicht von 400 bis 5000 eingesetzt werden. Geeignete Polyetherdiole sind z.B. Polyetherdiole der allgemeinen Formel H(-O-(CHR¹)ₙ-)ₘOH, wobei R¹ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich Mₙ von 400 bis 3000.
Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit eingesetzt werden. Die Dicarbonsäuren und Diole können lineare oder verzweigte aliphatische, cycloaliphatische oder aromatische Dicarbonsäuren oder Diole sein.
Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetra-chlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.
Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-O) aus. Hierbei ist n bevorzugt 4 bis 6 und der Substituent R² - Wasserstoff, ein Alkyl-, Cycloalkyl- oder Alkoxy-Rest Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.
Für die Herstellung der Polyesterdiole wird das unsubstituierte ε-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ε-Caprolactam mit niedermolekularen Diolen hergestellt werden.
Wenn über die Komponente (a) polymerisierbare Doppelbindungen in die Polyurethanmoleküle eingeführt werden sollen, dann müssen (a) Komponenten eingesetzt werden, die polymerisierbare Doppelbindungen enthalten. Als Beispiele für solche (a) Komponenten werden Polyesterpolyole, vorzugsweise Polyesterdiole genannt, die unter Verwendung von polymerisierbare Doppelbindungen enthaltenden Polyolen und/oder Polycarbonsäuren hergestellt worden sind. Als Beispiele für polymerisierbare Doppelbindungen enthaltende Polyole werden genannt: Trimethylolpropanmonoallylether, Glycerinmonoallylether, Pentaerythritmono- und Pentaerythritdiallylether. Als Beispiele für polymerisierbare Doppelbindungen enthaltende Polycarbonsäuren werden Alkendicarbonsäuren, Maleinsäure und ungesättigte dimerisierte Fettsäuren genannt,
Als Komponente (b) können aliphatische und/oder cycloaliphatische und/oder aromatische Polyisocyanate eingesetzt werden. Als Beispiele für aromatische Polyisocyanate werden Phenylendiisocyanat. Toluylendiisocyanat, Xylylendiisocyanat, Biphenylendiisocyanat, Naphtylendiisocyanat und Diphenylmethandiisocyanat genannt.
Aufgrund ihrer guten Beständigkeit gegenüber ultraviolettem Licht ergeben (cyclo)-aliphatische Polyisocyanate Produkte mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel OCN-(CR³₂)ᵣ-NCO), worin r eine ganze Zahl von 2 bis 20, insbesondere 6 bis 8 ist und R³, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat Propylendiisocyanat, Ethylethylendiisocyanat, Dimethylethyldiisocyanat, Methyltrimethylendiisocyanat und Trimethylhexandiisocyanat. Als weiteres Beispiel für ein aliphatisches Diisocyanat wird Tetramethytxytoidiisocyanat genannt. Besonders bevorzugt werden als Diisocyanate Isophorondiisocyanat und Dicyclohexylmethandiisocyanat genannt
Die Komponente (b) muß hinsichtlich der Funktionalität der Polyisocyanate so zusammengesetzt sein, daß kein vemetztes Polyurethanharz erhalten wird. Die Komponente (b) kann neben Diisocyanaten auch einen Anteil an Polyisocyanaten mit Funktionalitäten über zwei - wie z. B. Triisocyanate - enthalten.

Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.
Die Komponente (c) dient zur Einführung von polymerisierbaren Doppelbindungen in die Polyurethanharzmoleküle. Es ist bevorzugt, als Komponente (c) eine Verbindung einzusetzen, die mindestens zwei gegenüber NCO-Gruppen reaktive Gruppen und eine polymerisierbare Doppelbindung enthält Besonders bevorzugt werden als Komponente (c) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, >NH und -NH₂-Gruppen genannt, wobei -OH, >NH und -NH₂-Gruppen bevorzugt sind. Als Beispiele für Verbindungen, die als Komponente (c) eingesetzt werden können, werden genannt: Hydroxy(meth)acrylate, insbesondere Hydroxyalkyl(meth)acrylate wie Hydroxyethyl-, Hydroxypropyl-, Hydroxybutyl- oder Hydroxyhexyl(meth)acrylat und 2,3-Dihydroxypropyl(meth)acrylat, 2,3-Dihydroxypropylmonoallylether, 2,3-Dihydroxy-propansäureallylester, Glycerinmono(meth)acrylat, Glycerinmonoallylether, Penta-erythritmono(meth)acrylat, Pentaerythritdi(meth)acrylat, Pentaerythritmonoallylether, Pentaerythritdiallylether, Trimethylolpropanmonoallylether, Trimethylpropanmono-(meth)acrylat und Trimethylolpropandiallylether. Als Komponente (c) wird vorzugsweise Trimethylolpropanmonoallylether, Glycerinmono(meth)acrylat, Pentaerythritdi(meth)acrylat, Pentaerythritdiallylether, Glycerinmonoallylether und Trimethylolpropanmono(meth)acrylat eingesetzt Als Komponente (c) werden besonders bevorzugt Trimethylolpropanmonoallylether, Glycerinmonoallylether und 2,3-Dihydroxy-propansäureallylester eingesetzt Es ist bevorzugt die (c) Komponenten, die mindestens zwei gegenüber NCO-Gruppen reaktive Gruppen enthalten, kettenständig (nicht endständig) in die Polyurethanmoleküle einzubauen.
Die Einführung von zur Anionenbildung befähigten Gruppen in die Polyurethanmoleküle erfolgt über den Einbau von Verbindungen (d) in die Polyurethanmoleküle, die mindestens eine gegenüber Isocyanatgruppen reaktive und eine zur Anionenbildung befähigte Gruppe im Molekül enthalten.
Die Menge an einzusetzender Komponente (d) kann aus der angestrebten Säurezahl berechnet werden. Als Komponente (d) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (d) können beispielsweise Alkansäuren mit zwei Substituenten am α-ständigen Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (d) sind Dihydroxypropionsäure, Dihydroxybemsteinsäure und Dihydroxybenzoesäure. Eine besonders bevorzugte Gruppe von Alkansäuren sind die α,α-Dimethylolalkansäuren der allgemeinen Formel R⁴-C(CH₂OH)₂COOH, wobei R⁴ für ein Wasserstoffatom oder eine Alkylgruppe mit bis zu etwa 20 Kohlenstoffatomen steht. Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise α,δ-Diaminovaleriansäure, 3,4-Diaminobenzoesäure, 2,4-Diaminotoluolsulfonsäure und 2,4-Diaminodiphenylether-sulfonsäure.
Mit Hilfe der Komponente (e) können Poly(oxyalkylen)gruppen als nichtionische stabilisierende Gruppen in die Polyurethanmoleküle eingeführt werden. Als Komponente (e) können beispielsweise eingesetzt werden Alkoxypoly(oxyalkylen)alkohole mit der allgemeinen Formel R'O-(-CH₂₋CH"-O-)ₙH in der R' für einen Alkylrest mit 1 bis 6 Kohlenstoffatomen, R" für ein Wasserstoffatom oder einen Alkylrest mit 1 bis 6 Kohlenstoffatomen und n für eine Zahl zwischen 20 und 75 steht.
Der Einsatz der Komponente (f) führt zur Molekulargewichtserhöhung der Polyurethanharze. Als Komponente (f) können beispielsweise Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (a) und (f) eingesetzt.
Als Komponente (f) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanatgruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin. 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine wie Propylendiamin und 1-Amino-3-aminomethyl-3,5,5-trimethylcyclohexan. Es können auch Polyamine als Komponente (f) eingesetzt werden, die mehr als zwei Aminogruppen im Molekül enthalten. In diesen Fällen ist jedoch - z. B. durch Mitverwendung von Monoaminen - darauf zu achten, daß keine vemetzten Polyurethanharze erhalten werden. Solche brauchbaren Polyamine sind Diethylentriamin, Triethylentetramin, Dipropylendiamin und Dibutylentriamin. Als Beispiel für ein Monoamin wird Ethylhexylamin genannt Die Bindemittel werden hergestellt, indem eine Lösung des Polyurethanharzes (B) in einem organischen Lösemittel bzw. einem organischen Lösemittelgemisch bereitgestellt wird und in dieser Lösung ethylenisch ungesättigte Monomere oder ein Gemisch ethylenisch ungesättigter Monomere in einer radikalischen Polymerisation polymerisiert werden und das so erhaltene Reaktionsprodukt in eine wäßrige Dispersion überführt wird. Es ist bevorzugt, wassermischbare organische Lösemittel einzusetzen. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether und 3-Methyl-3-methoxybutanol oder Mischungen aus diesen Lösemitteln genannt.
Bevorzugt werden Ketone, wie z. B. Aceton, Methylethylketon, Diethylketon und Methylisobutylketon.
Die radikalische Polymerisation wird bei Temperaturen von 80 bis 160°C, vorzugsweise 100 bis 160°C in den oben genannten organischen Lösemitteln bzw. Lösemittelgemischen durchgeführt
Als Beispiele für brauchbare Polymerisationsinitiatoren werden freie Radikale bildende Initiatoren, wie z. B. Benzoylperoxid, Azobisisobutyronitril und t-Butylperbenzoat genannt.
Bei der Polymerisation kommt es auch zu Pfropfungsreaktionen zwischen dem Polyurethanharz (B) und der 30 Komponente (A). Die Komponenten (A) und (B) werden in einem Gewichtsverhältnis von 1 : 10 bis 10: 1, vorzugsweise 1 : 2 bis 2 : 1, besonders bevorzugt 1 : 1 eingesetzt.
Als ethylenisch ungesättigte Monomere können praktisch alle radikalisch polymerisierbaren Monomere eingesetzt werden, wobei jedoch die üblichen Einschränkungen für Copolymerisationen gelten, die durch das Q- und e-Schema nach Alfrey und Price bzw. durch die Copolymerisationsparameter vorgegeben sind (vgl. z. B. Brandrup und Immergut, Polymer Handbook, 2nd ed. John Wiley + Sons, New York (1975)).
Als ethylenisch ungesättigte Monomeren können eingesetzt werden:
(i) aliphatische oder cycloaliphatische Ester der Acrylsäure oder Methacrylsäure oder ein Gemisch aus solchen Estern und
(ii) mindestens eine Hydroxylgruppe im Molekül tragende ethylenisch ungesättigte Monomere oder ein Gemisch aus solchen Monomeren und
(iii) mindestens eine Carboxylgruppe im Molekül tragende ethylenisch ungesättigte Monomere oder ein Gemisch aus solchen Monomeren und
(iv) weitere von (i), (ii) und (iii) verschiedene ethylenisch ungesättigte Monomere oder ein Gemisch aus solchen Monomeren sowie
(v) polyungesättigte Monomere, insbesondere ethylenisch polyungesättigte Monomere.
Die oben genannten Monomere werden vorzugsweise als Mischungen eingesetzt, wobei die Komponente (i) in einer Menge von 40 bis 100, vorzugsweise 60 bis 90 Gew.-%, die Komponente (ii) in einer Menge von 0 bis 20, so vorzugsweise 3 bis 12 Gew.-%, die Komponente (iii) in einer Menge von 0 bis 30, vorzugsweise 5 bis 15 Gew.-%, die Komponente (iv)
in einer Menge von 0 bis 30, vorzugsweise 0 bis 10 Gew.-% und die Komponente (v) in einer Menge von 0 bis 5, vorzugsweise 0 Gew.-% eingesetzt wird, wobei die Summe der Gewichtsanteile von (i), (ii), (iii), (iv) und (v) stets 100 Gew.-% ergibt.
Als Komponente (i) können z. B. eingesetzt werden: Cyclohexylacrylat, Cyclohexylmethacrylat, Alkylacrylate und Alkylmethacrylate mit bis zu 20 Kohlenstoffatomen im Alkylrest, wie z. B. Methyl-, Ethyl-, Propyl-, Butyl-, Hexyl-, Ethylhexyl-, Stearyl- und Laurylacrylat und -methacrylat oder Gemische aus diesen Monomeren.
Als Komponente (ii) können z. B. eingesetzt werden: Hydroxyalkylester der Acrylsäure, Methacrylsäure oder einer anderen α,β-ethylenisch ungesättigten Carbonsäure. Diese Ester können sich von einem Alkylenglykol ableiten, das mit der Säure verestert ist, oder sie können durch Umsetzung der Säure mit einem Alkylenoxid 60 erhalten werden. Als Komponente (ii) werden vorzugsweise Hydroxyalkylester der Acrylsäure und Methacrylsäure, in denen die Hydroxyalkylgruppe bis zu 4 Kohlenstoffatome enthält, oder Mischungen aus diesen Hydroxyalkylestern eingesetzt Als Beispiele für derartige Hydroxyalkylester werden 2-Hydroxyethylacrylat, 2-Hydroxy-propylacrylat, 2-Hydroxypropylmethacrylat, 3-Hydroxypropylacrylat, 3-Hydroxypropyl-methacrylat, 2-Hydroxyethylmethacrylat, 3-Hydroxybutylacrylat oder 4-Hydroxybutyl(meth)acrylat genannt. Entsprechende Ester von anderen ungesättigten Säuren, wie z. B. Ethacrylsäure, Crotonsäure und ähnliche Säuren mit bis zu etwa 6 Kohlenstoffatomen pro Molekül können auch eingesetzt werden.
Als Komponente (iii) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.
Als Komponente (iv) können z. B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren.
Als Komponenten (v) können Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4-Butandioldi(meth)acrylat, 1,6-Hexandioldi(meth)acrylat, Trimethylolpropantri(meth)acrylat, Pentaerythritdi(meth)acrylat, Allylmethacrylat, Diallylphthalat, Butandioldivinylether, Divinylethylenhamstoff, Divinylpropylenhamstoff, Maleinsäurediallylester usw.
Bevorzugt wird der Einsatz von difunktionellen ungesättigten Monomeren wie Butandioldiacrylat oder Hexandioldiacrylat. Bei Verwendung von Glycidylmethacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Lösemittel) sorgfältig abzustimmen, um keine Gelierung zu erhalten. Die zugesetzte Menge an polyungesättigten Monomeren dient dazu, ohne Gelbildungen die mittlere Molmasse anzuheben. Bevorzugt ist es jedoch, kein polyungesättigtes Monomeres zuzusetzen.
Die aus (A) und (B) hergestellten Polymere müssen zur Anionenbildung befähigte Gruppen enthalten, die vor oder während der Überführung der Polymere aus dem organischen Lösemittel bzw. Lösemittelgemisch in Wasser neutralisiert werden und die Bildung stabiler wäßriger Dispersionen ermöglichen. Die in Rede stehenden Polymere können neben den zur Anionenbildung befähigten Gruppen auch noch nichtionische stabilisierende Gruppen wie z. B. Poly(oxyalkylen)gruppen, insbesondere Poly(oxyethylen)- und/oder Poly(oxypropylen)- und/oder Poly(oxyethylen)(oxypropylen)gruppen enthalten. Die Menge der in den aus (A) und (B) hergestellten Polymeren enthaltenen zur Anionenbildung befähigten Gruppen sollte so hoch sein, daß die Polymere eine Säurezahl von 5 bis 200, vorzugsweise 10 bis 40, besonders bevorzugt 15 bis 30 aufweisen. Die Einführung der zur Anionenbildung befähigten Gruppen in die in Rede stehenden Polymere kann beispielsweise über die Komponenten (d) und (iii) erfolgen. Die zur Anionenbildung befähigten Gruppen können ausschließlich in der Komponente (A) oder ausschließlich 30 in der Komponente (B) oder sowohl in der Komponente (A) als auch in der Komponente (B) enthalten sein. Es ist bevorzugt, daß 50 bis 100, vorzugsweise 70 bis 100, besonders bevorzugt 100% der zur Anionenbildung befähigten Gruppen in der Komponente (A) enthalten sind.
Die Einführung von Poly(oxyalkylen)gruppen in die Polymere kann über die Komponente (e) oder über ethylenisch ungesättigte Monomere, die mindestens eine Poly(oxyalkylen)gruppe enthalten (z. B. Poly(oxyethylen)(meth)acrylate) erfolgen. Die Polymere sollten keine übermäßigen Mengen an Poly(oxyalkylen)gruppen enthalten, weil sonst die Feuchtigkeitsbeständigkeit der Lackfilme herabgesetzt werden kann. Der Gehalt an Poly(oxyalkylen)gruppen kann bei 1 bis 10 Gew.-%, vorzugsweise 1 bis 5 Gew.-% (bezogen auf das Gewicht des aus (A) und (B) hergestellten Polymers) liegen.
Die aus (A) und (B) hergestellten Polymere sollten vorzugsweise keine nichtionischen stabilisierenden Gruppen enthalten.
Die aus (A) und (B) hergestellten Polymere sollen vorzugsweise eine Hydroxylzahl von 0 bis 100, besonders bevorzugt 20 bis 80 aufweisen. Das zahlenmittlere Molekulargewicht der Polymere soll vorzugsweise 2000 bis 20 000, besonders bevorzugt 5000 bis 12 000 betragen.
Besonders bevorzugte Polymere sind die aus (A) und (B) hergestellten Polymere, die einen Polymolekularitätsindex Q von 5 bis 90, vorzugsweise 10 bis 30 aufweisen. Der Polymolekularitätsindex ist der Quotient M_{w}: Mₙ, wobei M_{w} für das gewichtsmittlere und Mₙ für das zahlenmittlere Molekulargewicht steht.
Der Polymolekularitätsindex kann beispielsweise durch gezielten Einsatz von Reglern und die Art der eingesetzten Lösemittel beeinflußt werden. Außerdem wird Q durch den in der Komponente (B) enthaltenen Gehalt an polymerisierbaren Doppelbindungen beeinflußt. Q wird größer, je kleiner die Menge an eingesetztem Regler und die Menge an eingesetzten Lösemitteln, die als Regler fungieren können, ist. Je geringer der Gehalt an polymerisierbaren Doppelbindungen in der Komponente (B) ist, desto größer wird Q.
Q kann bestimmt werden durch Gelpermeationschromatographie unter Verwendung eines Polystyrolstandards.
Nach Beendigung der Polymerisation der Komponente (A) wird das erhaltene Polymer zumindest teilweise neutralisiert und in Wasser dispergiert.
Zur Neutralisation können sowohl organische Basen als auch anorganische Basen, wie Ammoniak und Hydrazin, verwendet werden. Vorzugsweise werden primäre, sekundäre und tertiäre Amine, wie z. B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin,Tripropylamin und Tributylamin.
Aus den erhaltenen wäßrigen Bindemitteldispersionen kann gegebenenfalls ein Teil oder vorzugsweise das gesamte organische Lösemittel abdestilliert werden. Die Bindemitteldispersionen enthalten Polymerteilchen, deren mittlere Teilchengröße zwischen 10 und 500 nm, vorzugsweise zwischen 60 bis 150 nm liegt (Meßmethode: Laserlichtstreuung, Meßgerät: Malvem Autosizer 2 C).

Aus den in Rede stehenden Bindemitteldispersionen können nach allgemein gut bekannten Methoden wäßrige Lacke, insbesondere wäßrige Uni- und wäßrige Metallic-Basislacke hergestellt werden. Die Basislacke sind auch für Reparaturzwecke verwendbar und können sowohl mit wäßrigen als auch mit konventionellen Klarlacken und Pulverlacken überlackiert werden.
Die Basislacke können neben den beschriebenen Bindemitteln noch weitere verträgliche wasserverdünnbare Kunstharze, wie z. B. Aminoplastharze, Polyurethanharze, Polyacrylatharze, Polyester und Polyether enthalten.
Die Basislacke enthalten vorzugsweise 5 bis 90, besonders bevorzugt 40 bis 70 Gew.-% des beschriebenen Bindemittels, wobei die Gewichtsprozentangaben auf den Gesamtfeststoffgehalt der Basislacke bezogen sind.

Die erfindungsgemäßen Basislacke weisen im allgemeinen einen Festkörpergehalt von etwa 15 bis 50 Gew.-% auf. Der Festkörpergehalt variiert mit dem Verwendungszweck der Beschichtungszusammensetzungen. Für Metallic-Lacke liegt er beispielsweise bevorzugt bei 17 bis 25 Gew.-%. Für unifarbige Lacke liegt er höher, beispielsweise bei 30 bis 45 Gew.-%.

Die erfindungsgemäßen Basislacke werden im allgemeinen auf einen pH-Wert zwischen 6,5 und 9,0 eingestellt. Der pH-Wert kann mit üblichen Aminen, wie z. B. Ammoniak, Triethylamin, Dimethylaminoethanol und N-Methylmorpholin eingestellt werden.

Mit den erfindungsgemäßen Basislacken können auch ohne Überlackierung mit einem transparenten Decklack qualitativ hochwertige Lackierungen hergestellt werden. Die so erhaltenen einschichtigen Lackierungen zeichnen sich insbesondere durch einen hohen Glanz, gute mechanischtechnologische Eigenschaften und hohe Schwitzwasserbeständigkeit aus.

Die erfindungsgemäßen Basislacke ermöglichen überraschenderweise die prozeßsichere Ausarbeitung von derzeit als nicht prozeßsicher eingestuften Basislack-Farbtönen. Demgemäß ist die Lagerung bzw. Verarbeitung dieser Basislacke im Vergleich zu den bisher bekannten Basislacken in überraschender Weise vereinfacht und verbessert worden.
Es war ausgehend von dem bekannten Stand der Technik nicht zu erwarten, daß durch die Einarbeitung von einem oder mehreren wasserlöslichen fettsäuremodifizierten Epoxyestem und/oder einem oder mehreren fettsäuremodifizierten Alkydharzen in Basislacke solche Basislacke erhalten werden, die eine verringerte oder ausgeschlossene Farbtonänderung bei Lagerung und/oder Scherbelastung in Abhängigkeit von der Pigmentkombination aufweisen.
Genauso überraschend war es, daß die bei den erfindungsgemäßen Basislacken eintretende Farbtonstabilisierung weitgehend unabhängig davon ist, ob und wenn ja wieviel Rheologieadditiv dem Basislack zugegeben wird.

Das erfindungsgemäße Verfahren zur Einführung der ein oder mehreren wasserlöslichen fettsäuremodifizierten Epoxyester und/oder der ein oder mehreren fettsäuremodifizierten Alkydharze in Basislacke weißt keine Besonderheiten auf. Vielmehr können die ein oder mehreren wasserlöslichen fettsäuremodifizierten Epoxyester und/oder die ein oder mehreren fettsäuremodifizierten Alkydharze an beliebiger Stelle der Basislackherstellung beigegeben werden. Indes ist es bevorzugt, die ein oder mehreren wasserlöslichen fettsäuremodifizierten Epoxyester und/oder die ein oder mehreren fettsäuremodfizierten Alkydharze zusammen mit dem oder den Pigmenten zuzugeben. Insbesondere ist es bevorzugt, die ein oder mehreren wasserlöslichen fettsäuremodifizierten Epoxyester und/oder die ein oder mehreren fettsäuremodifizierten Alkydharze und das oder die Pigmente zunächst getrennt von den anderen Komponenten des Basislackes miteinander zu vermischen und die resultierende Mischung dann dem übrigen Basislack zuzugeben.
Die Mischung der ein oder mehreren wasserlöslichen fettsäuremodifizierten Epoxyester und/oder der ein oder mehreren fettsäuremodifizierten Alkydharze mit dem Basislack oder dem oder den Pigmenten an sich erfolgt nach allgemein gut bekannten Verfahren, z.B. Rühren gegebenenfalls unter Zuhilfenahme von Mühlwerken.

Die erfindungsgemäßen Basislacke können mit wäßrigen, konventionellen oder Pulverklarlacken überlackiert werden.

### Beispiele für verwendbare Klarlacke sind dabei u.a. die folgenden:

Als Klarlacke zur Herstellung der Klarlackierungen kommen prinzipiell alle üblichen und bekannten Einkomponenten(1K)-, Zweikomponenten(2K)- oder Mehrkomponenten(3K, 4K)-Klarlacke, Pulverklarlacke, Pulverslurry-Klarlacke oder UV-härtbaren Klarlacke in Betracht.

Thermisch härtbare Einkomponenten(1K)-, Zweikomponenten(2K)- oder Mehrkomponenten(3K, 4K)-Klartacke sind aus den europäischen Patentanmeldungen DE 42 04 518 A 1, EP 0 594 068 A 1, EP 0 594 071 A 1, EP 0 594 142 A 1, EP 0 604 992 A 1 oder EP 0 596 460 A 1 den internationalen Patentanmeldungen WO 94/10211, WO 94/10212, WO 94/10213, WO 94/22969 oder WO 92/22615 oder den amerikanischen Patentschriften US 5,474,811, US 5,356,669 oder US 5,605,965 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder al-lophanatmodifizerte Aminoplastharze als Vemetzungsmittel (vgl. die amerikanischen Patentschriften US 5,474,811, US 5,356,669 oder US 5,605,965, die internationalen Patentanmeldungen WO 94/10211, WO 94/10212 oder WO 94/10213 oder die europäischen Patentanmeldungen EP 0 594 068 A 1, EP 0 594 071 A 1 oder EP 0 594 142 A 1).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vemetzungsmittel, welche bis zu ihrer Verwendung getrennt gelagert werden.

Thermisch härtbare Pulverklarlacke sind beispielsweise aus der deutschen Patentanmeldung DE 42 22 194 A 1, der Produkt-Information der Firma BASF Lacke + Farben AG, "Pulverlacke", 1990 oder der Firmenschrift von BASF Coatings AG "Pulverlacke, Pulverlacke für industrielle Anwendungen", Januar 2000, bekannt.

Pulverklarlacke enthalten als wesentliche Bestandteile bekanntermaßen epoxidgruppenhaltige Bindemittel und Polycarbonsäuren als Vemetzungsmittel.

Beispiele geeigneter Pulverslurry-Klarlacke sind aus der US-Patentschrift US 4,268,542 und den Patentanmeldungen DE 195 40 977 A 1, DE 195 18 392 A 1, DE 196 17 086 A 1, DE-A-196 13 547, EP 0 652 264 A 1, DE 196 18 657 A 1, DE 196 52 813 A 1, DE 196 17 086 A 1 oder DE 198 14 471 A 1 bekannt.

Pulversluny-Klarlacke enthalten bekanntermaßen Pulverklarlacke in einem wäßrigen Medium dispergiert.

Mit aktinischer Strahlung härtbare Klarlacke, Pulverklarlacke und Pulversluny-Klarlacke gehen beispielsweise aus den europäischen Patentanmeldungen EP 0 EP 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 198 35 206 A 1, DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373, US 4,675,234, US 4,634,602, US 4,424,252, US 4,208,313, US 4,163,810, US 4,129,488, US 4,064,161 oder US 3,974,303 hervor.

Thermisch und mit aktinischer Strahlung härtbare Klarlacke, Pulverklarlakke und Pulversluny-Klarlacke gehen beispielsweise aus den Patentanmeldungen DE 198 18 735 A 1, WO 98/40170, DE 199 08 013 A 1, DE 199 08 018 A 1, EP 0 844 286 A 1 oder EP 0 928 800 A 1 hervor.

Im allgemeinen werden die Klarlacke in einer Naßschichtdicke appliziert, daß nach ihrer Aushärtung Klarlackierungen mit der für ihre Funktionen notwendigen und vorteilhaften Schichtdicken resultieren. Vorzugsweise liegen sie bei 10 bis 100, vorzugsweise 15 bis 80, besonders bevorzugt 20 bis 75 und insbesondere 25 bis 70 µm.

Der Basislack im Rahmen der vorliegenden Erfindung kann die üblichen Pigmente, Füllstoffe und Nanopartikel enthalten. Die Pigmentierungshöhe liegt in üblichen Bereichen.
Beispiele geeigneter Effektpigmente sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A 1, DE 37 18 446 A 1, DE 37 19 804 A 1, DE 39 30 601 A 1, EP 0 068 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Mönoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethinpigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Polyamid oder Polyacrylnitril. Ergänzend wird auf Römpp Lexikon Lacke und Druckfarben, Georg Thieme Verlag, 1998, Seiten 250 ff., »Füllstoffe«, verwiesen.

Vorzugsweise werden Glimmer und Talkum angewandt, wenn die Kratzfestigkeit der aus den erfindungsgemäßen Pulverslurries hergestellten Beschichtungen verbessert werden soll.

Außerdem ist es von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden kann.

Beispiele geeigneter transparenter Füllstoffe sind solche auf der Basis von Siliziumdioxid, Aluminiumoxid oder Zirkoniumoxid.

Geeignete Nanopartikel werden ausgewählt aus der Gruppe, bestehend aus hydrophilen und hydrophoben, insbesondere hydrophilen, Nanopartikeln auf der Basis von Siliziumdioxid, Aluminiumoxid, Zinkoxid, Zirkoniumoxid und der Polysäuren und Heteropolysäuren von Übergangsmetallen, vorzugsweise von Molybdän und Wolfram, mit einer Primärpartikelgröße <50 nm, bevorzugt 5 bis 50 nm, insbesondere 10 bis 30 nm. Vorzugsweise haben die hydrophilen Nanopartikel keinen Mattierungseffekt. Besonders bevorzugt werden Nanopartikel auf der Basis von Siliziumdioxid verwendet.

Ganz besonders bevorzugt werden hydrophile pyrogene Siliziumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielsweise von der Firma Degussa unter der Marke Aerosil® vertrieben. Ganz besonders bevorzugt werden auch gefällte Wassergläser, wie Nanohektorite, die beispielsweise von der Firma Südchemie unter der Marke Optigel® oder von der Firma Laporte unter der Marke Laponite® vertrieben werden, verwendet.

Die erfindungsgemäßen Lacke können zusätzlich übliche organische Lösemittel enthalten. Deren Anteil wird 25 möglichst gering gehalten. Er liegt beispielsweise unter 15 Gew.-%.

Beispiele geeigneter zusätzlicher Bestandteile, die in dem erfindungsgemäßen Basislack enthalten sein können sind Vemetzungsmittel, zusätzliche thermisch und/oder mit aktinischer Strahlung härtbare Bindemittel, Reaktivverdünner für die thermische Härtung oder die Härtung mit aktinischer Strahlung, UV-Absorber, Lichtschutzmittel, Radikalfänger, Initiatoren für die radikalische Polymerisation, Katalysatoren für die thermische Vernetzung, Photoinitiatoren und Photocoinitiatoren, Entlüftungsmittel, Slipadditive, Polymerisationsinhibitoren, Entschäumer, Emulgatoren, Netz- und Dispergiermittel, Haftvermittler, Verlaufmittel, filmbildenden Hilfsmittel, zusätzliche rheologiesteuemde Additive (Verdicker), Flammschutzmittel, Sikkative, Trocknungsmittel, Hautverhinderungsmittel, Korrosionsinhibitoren, Wachse und Mattierungsmittel.

Beispiele geeigneter Vemetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP-B-0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A 1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden, unblockierte und blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 oder vorstehend als Verbindungen (a1) beschrieben werden, und/oder Tris(alkoxycarbonylamino)triazine, wie sie in den Patentschriften US 4,939,213 A 1, US 5,084,541 A 1, US 5,288,865 A 1 oder EP 0 604 922 A 1 beschrieben werden.

Bevorzugt werden als Vernetzungsmittel hexamethoxymethylierte Melaminharze wie z.B. Cymel 303 der Firma Cytec oder mit Methanol veretherte "high-Imino"-Melaminharze wie z.B. Cymel 327 der Firma Cytec eingesetzt.
Es ist auch möglich, mischveretherte Melaminharze einzusetzen.

Beispiele geeigneter zusätzlicher Bindemittel sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE 197 36 535 A 1 beschriebenen, Polyester, insbesondere die in den Patentschriften DE 40 09 858 A 1 oder DE 44 37 535 A 1 beschriebenen, Alkyde, acrylierte Polyester, Polylactone, Polycarbonate, Polyether, Epoxidharz-Amin-Addukte, (Meth)Acrylatdiole, partiell verseifte Polyvinylester oder Polyharnstoffe und/oder strahlenhärtbare Bindemittel wie (meth)acrylfunktionelle (Meth)Acrylatcopolymerisate, Polyetheracrylate, Polyesteracrylate, ungesättigte Polyester, Epoxyacrylate, Urethanacrylate, Aminoacrylate, Melaminacrylate, Silikonacrylate, Isocyanatoacrylate und die entsprechenden Methacrylate.

Beispiele geeigneter thermisch härtbarer Reaktiwerdünner sind stellungsisomere Diethyloctandiole oder Hydroxylgruppen enthaltende hyperverzweigte Verbindungen oder Dendrimere, wie sie in den Patentanmeldungen DE 198 09 643 A 1, DE 198 40 605 A 1 oder DE 198 05 421 A 1 beschrieben werden.

Beispiele geeigneter mit aktinischer Strahlung härtbarer Reaktiwerdünner werden in Römpp Lexikon Lacke und Druckfarben, Georg Thieme Verlag, Stuttgart, New York, 1998, auf Seite 491 unter dem Stichwort »Reaktivverdünner« beschrieben.

Beispiele geeigneter Photoinitiatoren und Coinitiatoren werden in Römpp Lexikon Lacke und Druckfarben, Georg Thieme Verlag Stuttgart, 1998, Seiten 444 bis 446, beschrieben.

Beispiele geeigneter Lichtschutzmittel sind HALS-Verbindungen, Benztriazole oder Oxalanilide.

Beispiele geeigneter thermolabiler radikalischer Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren für die Vernetzung sind Dibutylzinndilaurat, Lithiumdecanoat oder Zinkoctoat oder mit Aminen blockierte organische Sulfonsäuren.

Ein Beispiel eines geeigneten Entlüftungsmittels ist Diazadicycloundecan.

Beispiele geeigneter Emulgatoren sind nichtionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren und Sulfosäuren von alkoxylierten Alkanolen, Polyolen, Phenolen und Alkylphenolen.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Ein Beispiel eines geeigneten Haftvermittlers ist Tricyclodecandimethanol.

Beispiele geeigneter filmbildender Hilfsmittel sind Cellulose-Derivate.

Beispiele geeigneter zusätzlicher rheologiesteuernder Additive sind die aus den Patentschriften WO 94/22968, EP 0 276 501 A 1, EP 0 249 201 A 1 oder WO 97/12945 bekannten; vemetzte polymere Mikroteilchen, wie sie beispielsweise in der EP 0 008 127 A 1offenbart sind; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäure-anhydrid oder Ethylen-Maleinsäureanhydrid-Copolymere und ihre Derivate oder hydrophob modifizierte Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden.
Bevorzugte Verdicker sind Aerosil von Degussa und Laponite der Firma Laporte, die gegebenenfalls durch Acrylatverdicker, bevorzugt Viscalex HV30 der Firma Ciba und/oder Verdicker auf Polyurethanbasis ganz oder teilweise ersetzt sein können.

Ebenso können den erfindungsgemäßen Basislacken vernetzte polymere Mikroteilchen, wie sie z. B. in der EP-A-38 127 offenbart sind und/oder übliche anorganische oder organische Additive zugesetzt werden. So wirken als Verdicker beispielsweise wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob fettsäuremodifizierte ethoxylierte Urethane oder Polyacrylate sowie carboxylgruppenhaltige Polyacrylat-Copolymere mit einer Säurezahl von 60 bis 780, bevorzugt 200 bis 500.

Beispiele geeigneter weiterer Bestandteile, die nicht vorstehend im Detail aufgeführt werden, sind aus dem Lehrbuch »Lackadditive« von Johan Bieleman, Wiley-VCH, Weinheim, New York, 1998, bekannt.

Eine bevorzugte Ausführungsform der erfindungsgemäßen Basislacke ist es, wenn diese uni-farbig sind.

Die erfindungsgemäßen Basislacke können auf alle bekannten Untergründe, die üblicherweise mit Basislacken beschichtet werden, aufgetragen werden. Beispiele hierfür sind grundierte und nicht grundierte Kunststoffe, grundierte und nicht grundierte Metalle, Holz, Papier, sowie gegebenenfalls vorbehandelte Altlackierungen.

Die erfindungsgemäße Basislacke sind bevorzugt Bestandteil von Mehrschichsystemen. Sie können jedoch auch - je nach Verwendungszweck - für sich alleine, ohne weitere Lacke als eigenständige Decklacke verwendet werden.
Bevorzugt ist die Verwendung in Mehrschicht-Systemen.
Die Mehrschicht-Systeme enthaltend die erfindungsgemäßen Basislacke können für beliebige Substrate verwendet werden, wobei die Verwendung für Industrielackierungen und Automobillackierungen, insbesondere Automobillackierungen, bevorzugt sind.
Eine bevorzugte Ausführungsform der Mehrschicht-Systeme sind dabei Basecoat-Clearcoat-Systeme.

Besondere Vorteile entfaltet der erfindungsgemäße Beschichtungsstoff in seiner Verwendung als Wasserbasislack im Rahmen des Naß-in-naß-Verfahrens bei dem der Wasserbasislack auf das grundierte oder ungrundierte Substrat appliziert wird, wonach man die Wasserbasislackschicht trocknet, indes nicht härtet, auf die Wasserbasislackschicht einen Klarlack appliziert und die resultierende Klarlackschicht gemeinsam mit der Wasserbasislackschicht thermisch oder thermisch und mit aktinischer Strahlung (Dual Cure) härtet.

Im Falle eines grundierten Substrats kann die Grundierung, insbesondere die Füllerschicht, im nicht oder nur partiell gehärteten Zustand mit dem erfindungsgemäßen Wasserbasislack und dem Klarlack überschichtet werden, wonach alle drei Schichten gemeinsam eingebrannt werden.

In einer weiteren Variante des Naß-In-Naß-Verfahrens wird eine erste Wasserbasislackschicht auf eine auf dem Substrat befindliche, nicht oder nur partiell gehärtete Grundierung, insbesondere eine Elektrotauchlackschicht, appliziert, wonach man die beiden Schichten gemeinsam thermisch härtet. Die resultierende Lackierung wird dann, wie vorstehend beschrieben, mit einer zweiten Wasserbasislackierung und Klarlackierung überschichtet. Hierbei kann die erste oder die zweite Wasserbasislackierung aus einem erfindungsgemäßen Wasserbasislack hergestellt werden. Indes können beide Wasserbasislackierungen aus ein und demselben erfindungsgemäßen Wasserbasislack oder aus zwei stofflich unterschiedlichen erfindungsgemäßen Wasserbasislacken hergestellt werden.

Die erfindungsgemäßen Mehrschicht-Systeme können auf beliebige Substrate, wie z. B. Metall, Holz, Kunststoff oder Papier aufgebracht werden.

Der Auftrag der erfindungsgemäßen Basislacke und/oder Mehrschicht-Systeme kann direkt erfolgen oder, wie z.B. in der Autoindustrie üblich, nach Aufbringen einer Elektrotauchgrundierung und eines Füllers.

Die Applikation der erfindungsgemäßen Beschichtungsstoffe kann durch alle üblichen Applikationsmethoden, wie z.B. Spritzen, Rakeln, Streichen, Gießen, Tauchen, Tränken, Träufeln oder Walzen, vorzugsweise durch elektrostatisches und pneumatisches Spritzen, erfolgen. Dabei kann das zu beschichtende Substrat als solches ruhen, wobei die Applikationseinrichtung oder -anlage bewegt wird. Indes kann auch das zu beschichtende Substrat, z.B. ein Coil, bewegt werden, wobei die Applikationsanlage relativ zum Substrat ruht oder in geeigneter Weise bewegt wird. Enthalten die erfindungsgemäßen Beschichtungsstoffe Bestandteile, die mit aktinischer Strahlung aktivierbar sind, wird die Applikation vorzugsweise unter Ausschluß von Licht durchgeführt.

### Beispiele

### 1. Herstellung erfindungsgemäßer Bindemitteldispersionen

### 1.1 Bindemitteldispersion A

In einem 5l Reaktionsgefäß mit Rührer, Rückflußkühler und 2 Zulaufgefäßen werden zu einer Mischung aus 336 g eines Polyesters mit einem zahlenmittleren Molekulargewicht von 630 auf Basis Adipinsäure, Hexandiol und Neopentylglykol (Molverhältnis 1 :0,5 : 1) 31 g Neopentylglykol, 27,8 g Trimethylolpropanmonoallylether, 0,45 g Dibutylzinndilaurat und 279,7 g Methylethylketon, 275 g Isophorondiisocyanat gegeben. Das Reaktionsgemisch wird anschließend unter Stickstoffatmosphäre auf eine Temperatur von 80°C erhitzt. Bei einem NCO-Gehalt von 2,2% werden 66,7 g Trimethylolpropan zu dem Reaktionsgemisch gegeben und die Reaktion weitergeführt bis keine Isocyanatgruppen mehr nachgewiesen werden können. Danach werden 248,9 g Methylethylketon hinzugefügt.
Bei einer Temperatur von 82°C wird anschließend ein Gemisch aus 312,5 g n-Butylacrylat, 3123 g Methylmethacrylat, 74,7 g Hydroxypropylmethacrylat und 58,4 g Acrylsäure innerhalb von 3 Stunden zu dem Reaktionsgemisch gegeben. Gleichzeitig werden 175 g einer 13-prozentigen Lösung von 2,2'-Azobis(methylbutyronitril) in Methylethylketon innerhalb von 3,5 Stunden zudosiert.
Nach weiteren 2,5 Stunden bei 82°C werden 56,9 g Dimethylethanolamin und 2242 g deionisiertes Wasser zugegeben.
Nach Entfernung des Methylethylketons im Vakuum erhält man eine 40-prozentige wäßrige koagulatfreie Dispersion mit einem pH-Wert von 8,1 und einem mittleren Teilchendurchmesser von 100 nm.

### 1.2 Bindemitteldispersion B

In einem 5l Reaktionsgefäß mit Rührer, Rückflußkühler und 2 Zulaufgefäßen werden zu einer Mischung aus 353,5 g eines Polyesters mit einem zahlenmittleren Molekulargewicht von 630 auf Basis Adipinsäure, Maleinsäureanhydrid. Hexandiol und Ethylbutylpropandiol-1,3 (Molverhältnis 0,9 :0,1:0,5 : 1), 39,4g Neopentylglykol, 18,0 g Trimethylolpropanmonoallylether, 0,45 g Dibutylzinndilaurat und 330 g Methylisobutylketon, 289,5 g Isophorondiisocyanat gegeben.
Das Reaktionsgemisch wird anschließend unter Stickstoffatmosphäre auf eine Temperatur von 105°C erhitzt. Bei einem NCO-Gehalt von 2,2% werden 69,6 g Trimethylolpropan zu dem Reaktionsgemisch gegeben. Bei einem Rest-NCO-Gehalt von <0,05% werden 150,2 g Methylisobutylketon hinzugefügt
Bei einer Temperatur von 105°C wird anschließend ein Gemisch aus 417,4 g n-Butylacrylat, 217,4 g Methylmethacrylat 75,9 g Hydroxypropylmethacrylat und 59,4 g Acrylsäure innerhalb von 3 Stunden zu dem Reaktionsgemisch gegeben. Gleichzeitig werden 179,9 g einer 11,7%-igen Lösung von t-Butylperethylhexanoat in Methylisobutylketon innerhalb von 33 Stunden zudosiert.
Nach weiteren 2,5 Stunden bei 105°C werden 513 g Dimethylethanolamin und 2310 g deionisiertes Wasser zugegeben.
Nach Entfernung des Methylisobutylketons im Vakuum erhält man eine 43%ige wäßrige koagulatfreie Dispersion mit einem pH-Wert von 7,9 und einem mittlerem Teilchendurchmesser von 100 nm.

### 1.3 Bindemitteldispersion C

In einem 6l Reaktionsgefäß mit Rührer, Rückflußkühler und 2 Zulaufgefäßen werden zu einer Mischung aus 348,8 g eines Polyesters mit einem zahlenmittleren Molekulargewicht von 630 auf Basis Adipinsäure, Hexandiol und Ethylbutylpropandiol-1,3 (Molverhältnis 1 :0,5 : 1) 41,4g Dimethylolpropionsäure, 28,9g Trimethylolpropan-monoallylether und 330,9 g Methylethylketon, 285,4 g Isophorondiisocyanat gegeben.
Das Reaktionsgemisch wird anschließend unter Stickstoffatmosphäre auf eine Temperatur von 80°C erhitzt. Bei einem NCO-Gehalt von 2,1% werden 67,4 g Trimethylolpropan zu dem Reaktionsgemisch gegeben.
Bei einer Reaktionstemperatur von 82°C wird anschließend ein Gemisch aus 320,6 g n-Butylacrylat, 362g Methylmethacrylat, 76,7 g Hydroxypropylmethacrylat und 273 g Acrylsäure innerhalb von 3 Stunden zugegeben. Gleichzeitig werden 186,4 g einer 12%igen Lösung von 2,2'-Azobis(methylbutyronitril) in Methylethylketon innerhalb von 3,5 Stunden zudosiert.
Nach weiteren 2,5 Stunden bei 105°C werden 50,9 g Dimethylethanolamin und 3480,2 g deionisiertes Wasser zugegeben.
Nach Entfernung des Methylisobutylketons im Vakuum erhält man eine 30%ige wäßrige koagulatfreie Dispersion mit einem pH-Wert von 7,9 und einem mittlerem Teilchendurchmesser von 70 nm.

### Formulierungsbeispiele

Aus der oben genannten Bindemitteldispersion werden durch Vermischen mit den in der folgenden Tabelle angeführten weiteren Bestandteilen die folgenden Lackierungen erhalten. Die Vergleichsbeispiele enthalten dabei keine fettsäuremodifizierten Epoxyester.
Die Reihenfolge des Vermischen der Bestandteile ist dabei unerheblich und dem Fachmann.

| | Vergleichsbeispiel 1 (Lemongelb) | Beispiel 1 (Lemongelb) | Vergleichsbeispiel 2 (Minzgrün) | Beispiel 2 (Minzgrün) |
|---|---|---|---|---|
| **Bindemittel** | | | | |
| Cymel 303^{a)} | 3,10 | 3,04 | 2,85 | 2,89 |
| Cymel 327^{a)} | 4,42 | 4,33 | 4,06 | 4,11 |
| Bindemittel aus Herstellbeispiel 1.1^{a)} | 13,76 | 12,99 | 15,81 | 14,04 |
| Resydrol AX250W/75 EP^{a)} | 0,00 | 2,37 | 0,00 | 2,47 |
| *Summe* | **21,28** | **22,73** | **22,72** | **23,51** |
| | | | | |

| **Füllstoffe** | | | | |
|---|---|---|---|---|
| Aeorosil R972 | 0,99 | 0,97 | 1,02 | 1,03 |
| *Summe* | **0,99** | **0,97** | **1,02** | **1,03** |
| | | | | |

| **Buntpigmente** | | | | |
|---|---|---|---|---|
| Titan Rutil | 15,32 | 15,01 | 2,87 | 2,91 |
| Sandoringelb 6GL | 3,19 | 3,13 | -- | -- |
| Ruß Monarch 1400 | 0,01 | 0,01 | -- | -- |
| Hostapermgelb H3G | -- | -- | 1,77 | 1,79 |
| Novopermorange HL70 | -- | -- | 0,02 | 0,02 |
| Palomarblue B4806 | ― | ― | b,15 | 0,15 |
| Heliogengrün L9361 | ― | ― | 4,99 | 5,05 |
| *Summe* | **18,53** | **18,15** | **9,80** | **9,93** |
| | | | | |

| **Lösungsmittel** | | | | |
|---|---|---|---|---|
| Wasser, dest. | 39,64 | 38,22 | 44,88 | 43,01 |
| organische | 14,66 | 15,15 | 15,15 | 16,17 |
| *Summe* | **54,30** | **53,37** | **60,03** | **59,18** |
| | | | | |

| **Additive** | | | | |
|---|---|---|---|---|
| Laponite RD | 0,44 | 0,43 | 0,48 | 0,49 |
| Lupranol 1100 | 0,44 | 0,43 | 0,48 | 0,49 |
| Tensid S | 0,39 | 0,38 | 0,39 | 0,39 |
| Agitan 281 | 0,72 | 0,71 | 0,89 | 0,90 |
| Nacure 2500 | 0,43 | 0,42 | 0,43 | 0,44 |
| EFKA 772 | 0,211 | 0,21 | 0,16 | 0,16 |
| Pluriol P900 | 1,00 | 0,98 | 2,29 | 2,32 |
| Polyethylenglykol | 0,11 | 0,11 | 0,11 | 0,11 |
| Disperbyk 184 | 0,36 | 0,36 | 0,35 | 0,36 |
| DMEA | 0,67 | 0,64 | 0,73 | 0,69 |
| *Summe* | **4,76** | **4,65** | **6,33** | **6,35** |
| | | | | |
| *Gesamtsumme* | **99,86** | **99,87** | **99,90** | **100,00** |

| | | | | |
|---|---|---|---|---|
| a) Mengenangabe bezieht sich auf den Festkörper | | | | |

In allen Formulierungen sind absolute Gew.-% angegeben

### Erklärungen zur Tabelle:

Aerosil R972 - hydrophobes pyrogenes Siliciumdioxid der Firma Degussa
Laponite RD - Rheologieadditiv der Firma Southem Clay Products
Tensid S - Netzmittel der Firma Biesterfeld
Agitan 281 - Entschäumer der Firma Münzing Chemie
Nacure 2500 - Härtungskatalysator der Firma King Industries
EFKA 772 - Verlaufsmittel der Firma EFKA
Pluriol P900 - Netzmittel der Firma BASF
Disperbyk 184 - Dispergierhilfsmittel der Firma BYK
DMEA - Dimethylethanolamin

Die erfindungsgemäßen Basislacke werden durch elektrostatisches Verspritzen so auf mit einem handelsüblichen Elektrotauchlack und mit einem handelsüblichen Füller beschichtete zinkphosphatierte Karosseriebleche lackiert, daß Lackfilme mit Trockenfilmdicken (je nach Farbton) von 12 bis 30 µm erhalten werden. Nach kurzer Abdunstzeit wird mit einem handelsüblichen Klarlack überlackiert und 30 Minuten bei 130°C eingebrannt. Ein so lackiertes Blech wird nochmals mit dem erfindungsgemäßen Basislack und nach kurzer Ablüftzeit mit einem handelsüblichen 2 Komponenten Reparaturlack überlackiert und 30 Minuten bei 90°C getrocknet. Die Trokkenfilmdicken der Klarlacke betragen ca. 40 µm. Es werden Lackierungen mit gutem Verlauf und sehr guten mechanischen Eigenschaften erhalten. Die lackierten Bleche zeigen nach 240-stündiger Belastung im Schwitzwasser-Konstantklima nach SK DIN 50017 keine Veränderungen auf der Lackoberfläche. Eine anschließend durchgeführte Haftungsprüfung nach DIN 53151 ergibt den Wert 0. Ein anschließend durchgeführter Beschuß mit 1000 g kantigem Hartgußstrahlmittel (4-5 mm Durchmesser) in einem Erichsen Steinschlaggerät 508 nach VDA führte nur zu geringfügigen Abplatzungen.

Für die Farbtonbestimmungen ergaben sich folgende Meßwerte:

| | Vergleichsbeispiel 1 | Beispiel 1 | Vergleichsbeispiel 2 | Beispiel 2 |
|---|---|---|---|---|
| 1 Woche Rührtest | | | | |
| dL* | -0,1 | 0,0 | ---^{a)} | 0,08 |
| da* | 0,8 | 0,0 | ---^{a)} | -0,35 |
| db* | -5,6 | -0,2 | ---^{a)} | 0,05 |
| dC* | | | ---^{a)} | 0,34 |
| dh* | | | ---^{a)} | 0,08 |
| dE' | 5,6 | 0,2 | ---^{a)} | 0,36 |

| Ergebnis | n.i.O. | i.O. | Weiße Stippen^{a)} | i.O. |
|---|---|---|---|---|
| 2 Wochen 40°C Ofenlagerung | | | | |
| dL* | -0,2 | -0,2 | | |
| da* | 0,5 | 0,2 | | |
| db* | -3,3 | -0,5 | | |
| dC* | -3,3 | -0,6 | | |
| dh* | 0,0 | -0,1 | | |
| dL' | 3,3 | 0,6 | | |
| dE' | 3,3 | 0,57 | | |
| Ergebnis | n.i.0. | i.O. | | |

| | | | | |
|---|---|---|---|---|
| a) durch Stippenbildung keine aussagekräftigen Meßwerte möglich | | | | |

Die farbmetrischen Messungen und deren Auswertung erfolgten gemäß DIN 6175-2.
Ein dE' von größer 1 ist dabei ein nicht mehr akzeptables Ergebnis.
Aus den Beispielen wird somit deutlich, daß die erfindungsgemäßen Zusammensetzungen bessere farbmetrische Ergebnisse liefern als die Zusammensetzungen gemäß Stand der Technik.

## Patentansprüche

1. Basislack enthaltend ein oder mehrere wasserlösliche fettsäuremodifizierte Epoxyester und/oder ein oder mehrere fettsäuremodifizierte Alkydharze,
wobei der Basislack als Bindemittel ein Polymer enthält, das erhältlich ist, indem in einem organischen Lösemittel oder in einem Gemisch organischer Lösemittel
A) ethylenisch ungesättigte Monomere oder ein Gemisch ethylenisch ungesättigter Monomere in Gegenwart
B) eines Polyurethanharzes, das ein zahlenmittleres Molekulargewicht von 200 bis 30 000 aufweist und das im statistischen Mittel pro Molekül 0,05 bis 1.1 polymerisierbare Doppelbindungen enthält,
polymerisiert werden und das so erhaltene Reaktionsprodukt in eine wäßrige Dispersion überführt wird.

2. Basislack nach Anspruch 1, **dadurch gekennzeichnet, daß** der Basislack 1 bis 10%, bezogen auf den Festkörper, ein oder mehrere wasserlösliche fettsäuremodifizierte Epoxyester und/oder ein oder mehrere fettsäuremodifizierte Alkydharze enthält.

3. Verfahren zur Herstellung von Basislacken, **dadurch gekennzeichnet, daß** man ein oder mehrere wasserlösliche fettsäuremodifizierte Epoxyester und/oder ein oder mehrere fettsäuremodifizierte Alkydharze zu einem Basislack,
der als Bindemittel ein Polymer enthält, das erhältlich ist, indem in einem organischen Lösemittel oder in einem Gemisch organischer Lösemittel
A) ethylenisch ungesättigte Monomere oder ein Gemisch ethylenisch ungesättigter Monomere in Gegenwart
B) eines Polyurethanharzes, das ein zahlenmittleres Molekulargewicht von 200 bis 30 000 aufweist und das im statistischen Mittel pro Molekül 0,05 bis 1.1 polymerisierbare Doppelbindungen enthält,
polymerisiert werden und das so erhaltene Reaktionsprodukt in eine wäßrige Dispersion überführt wird,
zusetzt.

4. Verfahren nach Anspruch 3, **dadurch gekennzeichnet, daß** der Basislack 1 bis 10%, bezogen auf den Festkörper, ein oder mehrere wasserlösliche fettsäuremodifizierte Epoxyester und/oder ein oder mehrere fettsäuremodifizierte Alkydharze enthält.

5. Verwendung des Basislackes nach Anspruch 1 oder 2 für Mehrschicht-systeme.

6. Verwendung nach Anspruch 5, **dadurch gekennzeichnet, daß** das Mehrschichtsystem ein Basecoat-Clearcoat-System ist.

7. Verwendung nach Anspruch 5, **dadurch gekennzeichnet, daß** das Mehrschichtsystem ein Automobillacksystem ist.

8. Verwendung nach Anspruch 5, **dadurch gekennzeichnet, daß** das Automobillacksystem ein Reparaturlack-System ist.

## Claims

1. Basecoat material comprising one or more water soluble, fatty acid modified epoxy esters and/or one or more fatty acid modified alkyd resins, the basecoat material comprising as its binder a polymer obtainable by polymerizing
A) ethylenically unsaturated monomers or a mixture of ethylenically unsaturated monomers in the presence
B) of a polyurethane resin having a number average molecular weight of from 200 to 30 000 and containing an average per molecule from 0.05 to 1.1 polymerizable double bonds
in an organic solvent or mixture of organic solvents and converting the resultant reaction product into an aqueous dispersion.

2. Basecoat material according to Claim 1, **characterized in that** the basecoat material comprises from 1 to 10%, based on solids, of one or more water soluble, fatty acid modified epoxy esters and/or one or more fatty acid modified alkyd resins.

3. Process for preparing basecoat materials, **characterized in that** one or more water soluble, fatty acid modified epoxy esters and/or one or more fatty acid modified alkyd resins are added to a basecoat material comprising as its binder a polymer obtainable by polymerizing
A) ethylenically unsaturated monomers or a mixture of ethylenically unsaturated monomers in the presence
B) of a polyurethane resin having a number average molecular weight of from 200 to 30 000 and containing an average per molecule from 0.05 to 1.1 polymerizable double bonds
in an organic solvent or mixture of organic solvents and converting the resultant reaction product into an aqueous dispersion.

4. Process according to Claim 3, **characterized in that** each basecoat material comprises from 1 to 10%, based on solids, of one or more water soluble, fatty acid modified epoxy esters and/or one or more fatty acid modified alkyd resins.

5. Use of the basecoat material according to Claim 1 or 2 for multicoat systems.

6. Use according to Claim 5, **characterized in that** the multicoat system is a basecoat-clearcoat system.

7. Use according to Claim 5, **characterized in that** the multicoat system is an automotive paint system.

8. Use according to Claim 5, **characterized in that** the automotive paint system is a refinish paint system.

## Revendications

1. Peinture d'apprêt contenant un ou plusieurs époxyesters hydrosolubles modifiés par des acides gras et/ou une ou plusieurs résines alkydes modifiées par des acides gras, où la peinture d'apprêt contient, en tant que liant, un polymère qui peut être obtenu en polymérisant, dans un solvant organique ou dans un mélange de solvants organiques,
A) des monomères éthyléniquement insaturés ou un mélange de monomères éthyléniquement insaturés en présence
B) d'une résine de polyuréthane qui présente un poids moléculaire moyen en nombre de 200 à 30 000 et qui renferme, en moyenne statistique par molécule, de 0,05 à 1,1 doubles liaisons polymérisables,
et en transformant le produit de réaction ainsi obtenu en une dispersion aqueuse.

2. Peinture d'apprêt selon la revendication 1, **caractérisée en ce que** la peinture d'apprêt contient de 1 à 10 %, par rapport à la teneur en matières solides, d'un ou de plusieurs époxyesters hydrosolubles modifiés par des acides gras et/ou d'une ou de plusieurs résines alkydes modifiées par des acides gras.

3. Procédé de production de peintures d'apprêt, **caractérisée en ce qu'**un ou plusieurs époxyesters hydrosolubles modifiés par des acides gras et/ou une ou plusieurs résines alkydes modifiées par des acides gras sont ajoutés pour donner lieu à une peinture d'apprêt qui contient, en tant que liant, un polymère qui peut être obtenu en polymérisant, dans un solvant organique ou dans un mélange de solvants organiques,
A) des monomères éthyléniquement insaturés ou un mélange de monomères éthyléniquement insaturés en présence
B) d'une résine de polyuréthane qui présente un poids moléculaire moyen en nombre de 200 à 30 000 et qui renferme, en moyenne statistique par molécule, de 0,05 à 1,1 doubles liaisons polymérisables,
et en transformant le produit de réaction ainsi obtenu en une dispersion aqueuse.

4. Procédé selon la revendication 3, **caractérisé en ce que** la peinture d'apprêt contient de 1 à 10 %, par rapport à la teneur en matières solides, d'un ou de plusieurs époxyesters hydrosolubles modifiés par des acides gras et/ou d'une ou de plusieurs résines alkydes modifiées par des acides gras.

5. Utilisation de la peinture d'apprêt selon la revendication 1 ou 2 pour des systèmes multicouches.

6. Utilisation selon la revendication 5, **caractérisée en ce que** le système multicouche est un système à peinture d'apprêt et peinture transparent.

7. Utilisation selon la revendication 5, **caractérisée en ce que** le système multicouche est un système de peinture pour automobiles.

8. Utilisation selon la revendication 5, **caractérisée en ce que** le système de peinture pour automobile est un système de peinture de retouches.
